Europäisches Patentamt

(19) European Patent Office

Office européen des brevets

(11) Veröffentlichungsnummer: **0 098 988**
**B1**

(12) # EUROPÄISCHE PATENTSCHRIFT

(45) Veröffentlichungstag der Patentschrift:
19.03.86

(51) Int. Cl.⁴: **C 08 G 61/12, H 01 B 1/12**

(21) Anmeldenummer: 83105892.0

(22) Anmeldetag: 16.06.83

(54) Elektrisch leitfähige Copolymere von Pyrrolen sowie Verfahren zu ihrer Herstellung.

(30) Priorität: 24.06.82 DE 3223545

(43) Veröffentlichungstag der Anmeldung:
25.01.84 Patentblatt 84/4

(45) Bekanntmachung des Hinweises auf die Patenterteilung:
19.03.86 Patentblatt 86/12

(84) Benannte Vertragsstaaten:
BE DE FR GB NL

(56) Entgegenhaltungen:
EP - A - 0 053 669
EP - A - 0 055 358
EP - A - 0 059 646
FR - A - 2 080 470

IBM TECHNICAL DISCLOSURE BULLETIN, Band 22, Nr. 4, September 1979, Seite 1638, New York, USA A.F. DIAZ et al.: "Polypyrrole copolymer"

(73) Patentinhaber: BASF Aktiengesellschaft,
Carl-Bosch-Strasse 38, D-6700 Ludwigshafen (DE)

(72) Erfinder: Naarmann, Herbert, Dr., Haardtblick 15,
D-6719 Wattenheim (DE)
Erfinder: Koehler, Gernot, Dr., Berner Weg 32,
D-6700 Ludwigshafen (DE)
Erfinder: Schlag, Johannes, Dr., Leuschnerstrasse 36,
D-6700 Ludwigshafen (DE)

## Beschreibung

Die Erfindung betrifft elektrisch leitfähige Copolymere von Pyrrolen und Alkinen und/oder Aromaten sowie ihre Herstellung durch anodische Polymerisation von Pyrrolen und Alkinen und/oder Aromaten in Gegenwart von Leitsalzen. Die so erhaltenen erfindungsgemäßen Copolymere sind - im allgemeinen filmförmige - Materialien, die eine hohe elektrische Leitfähigkeit, ein hohes mechanisches Niveau, eine gute Stabilität sowie insgesamt vorteilhafte anwendungstechnische Eigenschaften besitzen.

In der US-PS 3 574 072 wird die elektrochemische Polymerisation von 5- und 6-Ring-Heterocyclen, unter anderem von Pyrrol, beschrieben. Über die elektrische Leitfähigkeit und die Verarbeitbarkeit der erhaltenen Materialien werden keine näheren Angaben gemacht. Ebenso findet sich in dieser Patentschrift kein Hinweis auf die Copolymerisation der Heterocyclen und die Eigenschaften hieraus hergestellter Copolymerisate.

Aus Arbeiten von A.F. Diaz et al, J.C.S. Chem. Comm. 1979, Seite 635; J.C.S. Chem. Comm. 1979, Seite 854 sowie ACS Org. Coat. Plast. Chem. 43 (1980) wurde bekannt, daß durch anodische Polymerisation von Pyrrol in Gegenwart von Leitsalzen Filme mit elektrischen Leitfähigkeiten bis zu $10^2$ Ohm$^{-1}$ cm$^{-1}$ gebildet werden. Hierbei handelt es sich um p-leitende Polypyrrole, wobei als Gegenionen vor allem $BF_4^-$, $AsF_6^-$, $ClO_4^-$ und $HSO_4^-$ genannt werden. Die mechanischen und elektrochemischen Eigenschaften der so hergestellten Filme sind jedoch bei weitem noch nicht zufriedenstellend. Es ist bislang noch nicht gelungen, n-leitende Polypyrrole herzustellen.

Rss/HB

Gemäß der EP-A- 55 358 können durch anodische Polymerisation von Pyrrolen in Gegenwart von Salzen saurer Nitroaromaten als Leitsalzen elektrisch leitfähige Polypyrrol-Komplexe mit Nitroaromat-Anionen hergestellt werden, die im Vergleich zu den vorbekannten elektrisch leitfähigen Polypyrrolen ein erheblich höheres mechanisches Niveau aufweisen. Doch auch diese Polypyrrol-Komplexe mit Nitroaromat; -Anionen sind für spezielle Anwendungszwecke noch verbesserungsbedürftig, insbesondere sind auch sie nur p-leitend und können nicht in n-leitende Systeme überführt werden.

Des weiteren ist es bekannt, Polyensysteme, wie Polyacetylen oder Polyphenylen, durch Dotieren mit Elektronenakzeptoren oder Elektronendonatoren in elektrisch hochleitfähige Polymere zu überführen (vgl. z.B. A.G. McDiarmid und A.J. Heeger, "Synthetic Metals", Band 1 (1979/80), Seiten 101 bis 118 sowie EP-A1-16305). Diese elektrisch leitfähigen polymeren Systeme können sowohl p- als auch n-Leiter sein, haben jedoch den Nachteil, daß ihre Herstellung, insbesondere in der für die Anwendung bevorzugten Film-Form, und ihre Handhabbarkeit wegen der großen Empfindlichkeit gegen Luft und Feuchtigkeit bzw. der schweren Verarbeitbarkeit der Polymeren schwierig und aufwendig ist, wodurch auch ihre Verwendbarkeit eingeschränkt ist.

Aus dem IBM Technical Disclosure Bulletin Vol. 22, Seite 1638 sind Copolymere aus Pyrrol und N-Methylpyrrol bekannt. Diese Copolymere haben jedoch eine unbefriedigende elektrische Leitfähigkeit.

Aus der FR-A-2 080 470 sind polymere Verbindungen bekannt, die beispielsweise Pyrroleinheiten und 3-fach Doppelbindungen enthalten. Derartige Polymere weden durch Heterocyclisierungsreaktion von Polymerverbindungen erhalten, die mehrfach Alkingruppen enthalten. Derartige Polymere sind jedoch nicht elektrisch leitfähig.

Die EP-A-0 059 646 beschreibt Polymere die ebenfalls heterocyclische Gruppen und 3-fach Bindungen im Molekül enthalten, derartige Polymere können beispielsweise durch oxidative Kupplung von Diethynyl-heteraromatischen Verbindungen erhalten werden. Auch derartige Polymere sind nicht elektrisch leitfähig.

Aufgabe der vorliegenden Erfindung ist es, weitere, neue elektrisch hochleitfähige Polymere mit einem hohen mechanischen Niveau zu schaffen, die sich einfach und leicht in Form von Filmen herstellen lassen und dadurch eine gute Handhabbarkeit und Anwendbarkeit aufweisen. Insbesondere ist es Aufgabe der vorliegenden Erfindung, weitere, neue Polymere von Pyrrolen zu schaffen, die die genannten Eigenschaften besitzen und die aufgrund ihres ausgewogenen und gegenüber den bekannten elektrisch leitfähigen polymeren Systemen verbesserten Eigenschaftsbildes, insbesondere auch ihrer anwendungstechnischen Eigenschaften, eine sehr gute Verwendbarkeit und große Anwendungsbreite haben.

Es wurde nun überraschend gefunden, daß diese Aufgabe durch Copolymere von Pyrrolen und Alkinen und/oder Aromaten, die durch anodische Oxidation in Gegenwart von Leitsalzen hergestellt werden, gelöst wird.

Gegenstand der Erfindung sind demzufolge elektrisch leitfähige Copolymere von Pyrrolen und Alkinen und/oder Aromaten, die Anionen des bei ihrer Herstellung verwendeten Leitsalzes enthalten.

Gemäß einer Ausgestaltungsform betrifft die Erfindung solche Copolymere, die durch anodische Copolymerisation von Pyrrolen zusammen mit Alkinen und/oder Aromaten erhalten worden sind. Gemäß einer anderen Ausgestaltungsform betrifft die Erfindung Copolymere, die durch anodisches Aufpolymerisieren von Pyrrolen oder von Pyrrolen und Alkinen und/oder Aromaten auf elektrisch leitfähige Polymerisate von Alkinen erhalten worden sind. Gemäß einer weiteren Ausgestaltungsform betrifft die Erfindung Copolymere, die durch anodisches Aufpolymerisieren von Pyrrolen oder von Pyrrolen und Alkinen und/oder Aromaten auf elektrisch leitfähige Polyaromaten erhalten worden sind. In noch einer anderen Ausgestaltungsform betrifft die Erfindung Copolymere, die durch anodisches Aufpolymerisieren von Alkinen und/oder Aromaten bzw. von Pyrrolen und Alkinen und/oder Aromaten auf elektrisch leitfähige Polypyrrole erhalten worden sind.

Gegenstand der Erfindung sind weiterhin Verfahren zur Herstellung dieser Copolymeren gemäß der nachfolgenden detaillierten Beschreibung.

Bei den erfindungsgemäßen, durch anodische Polymerisation hergestellen Copolymeren handelt es sich um elektrisch hochleitfähige polymere Systeme, die zumindest teilweise das Anion des bei ihrer Herstellung verwendeten Leitsalzes enthalten. Man kann die erfindungsgemäßen Copolymere daher auch als Komplexe aus Kationen der Copolymeren und Gegenanionen bezeichnen. Die Copolymere der Erfindung besitzen neben einer hohen elektrischen Leitfähigkeit gute mechanische Eigenschaften und eine zufriedenstellende Stabilität gegenüber Sauerstoff und Feuchtigkeit. Insbesondere vorteilhaft ist, daß sich diese Copolymeren auch in n-leitende Systeme überführen lassen. Es hat sich gezeigt, daß die erfindungsgemäßen Copolymere gut und einfach in Form von selbsttragenden Filmen herzustellen, gut zu handhaben und zu verarbeiten sind, wodurch sie auch wegen ihrer insgesamt ausgewogenen und verbesserten anwendungstechnischen Eigenschaften eine sehr gute und breite Verwendbarkeit besitzen.

In den erfindungsgemäßen Copolymeren kann der Anteil der Einheiten aus den Pyrrolen und dementsprechend auch der Anseil der Einheiten aus den Alkinen und/oder Aromaten, insbesondere in Abhängigkeit von dem speziellen Typ des Copolymeren sowie dessen angestrebten Eigenschaften, in weiten Grenzen schwanken, und beispielsweise 1 bis 99 Gew.%, bezogen auf das Copolymer, betragen. Als sehr geeignet haben sich Copolymere erwiesen, in denen das Gewichtsverhältnis der Einheiten aus den Pyrrolen zu den Einheiten aus den Alkinen und/oder Aromaten im Bereich von 20:80 bis 90:10 liegt.

Unter Pyrrolen werden im Rahmen dieser Erfindung das unsubstituierte Pyrrol selber, die substituierten Pyrrole, wie die N-Alkylpyrrole, N-Arylpyrrole, die an den C-Atomen monoalkyl- oder dialkylsubstituierten Pyrrole und die an den C-Atomen monohalogen- oder dihalogensubstituierten Pyrrole, als auch di- und oligomere Pyrrole verstanden. Bei der Herstellung der erfindungsgemäßen Copolymeren konnen die Pyrrole allein oder in Mischung miteinander eingesetzt werden, so daß die Copolymeren ein oder mehrere verschiedene Pyrrole eingebaut enthalten können. Vorzugsweise leiten sich die wiederkehrenden Pyrrol-Einheiten in den Copolymeren im wesentlichen vom unsubstituierten Pyrrol selber ab. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Als Alkine für die Herstellung der erfindungsgemäßen Copolymeren kommen Acetylen, Alkylacetylene, insbesondere mit 1 bis 12 C-Atomen in den Alkylresten, Arylacetylene, halogensubstituierte Acetylene, aber auch Di- oder Polyalkine und Alkenylalkine in Betracht. Beispiele für Alkylacetylene sind Propin, Butin, Pentin, Hexin, Heptin, Oktin oder Decin. Stellvertretend für die Arylacetylene sei das Phenylacetylen genannt. Aus der Gruppe der Di- oder Polyalkine, zu denen beispielsweise Butadiin, Hexadiin, Octadiin, Diethinylbenzol oder Triethinylbenzol gehören, ist unter anderem das 1,6-Heptadiin bevorzugt. Als besonders günstiges Alkin hat sich das Acetylen selber erwiesen; dementsprechend ist Polyacetylen auch das bevorzugte Polyalkin.

Als Aromaten für die Herstellung der erfindungsgemäßen Copolymeren kommen sowohl benzoide aromatische Kohlenwasserstoffe als auch nicht-benzoide aromatische Kohlenwasserstoffe und quasi-aromatische Verbindungen in getracht. Bei den benzoiden Aromaten, die erfindungsgemäß zur Anwendung kommen können, handelt es sich insbesondere um mehrkernige aromatische Ringsysteme mit 6 C-Atomen pro Ring, wobei die aromatischen Ringe entweder in linearer Verknüpfung oder in kondensierter Form miteinander verbunden sein können.

Als Beispiele für die linear verknüpften aromatischen Ringsysteme dieser Art seien die Oligophenylene, insbesondere mit 2 bis 6 Phenyl- bzw. Phenylenresten, genannt, wie z.B. Diphenyl, Terphenyl, Quarterphenyl, Quinquiphenyl und Sexiphenyl. Aus dieser Reihe hat sich das Terphenyl als sehr vorteilhaft erwiesen. Beispiele für kondensierte aromatische Ringsysteme sind Anthracen, Phenanthren, Tetracen, aber auch Acenaphthen oder Phenalen. Als Polyaromaten sind die Polyphenylene bevorzugt. Als nicht-benzoide aromatische Kohlenwasserstoffe und quasi-aromatische Kohlenwasserstoffe kommen neben Verbindungen wie z.B. Cyclooctatetraen und Heptalen insbesondere die Verbindungen in Betracht, die 5-gliedrige Ringe enthalten. Hierzu zählen vor allem das Cyclopentadien und dessen Derivate, wie substituierte Cyclopentadiene, z.B. 2-Chlor-cyclopentadien oder 2-Bromcyclopentadien; Fulvene, z.B. das Dimethylfulven oder Phenylfulven; Azulene, z.B. das unsubstituierte Azulen, Benzazulen, Trimethylazulen oder Gujaazulen; Pentalen und insbesondere Inden und substituierte Indene.

Zur Herstellung der erfindungsgemäßen Copolymeren werden die Monomeren, das sind die Pyrrole, Alkine und/oder Aromaten, in einem polaren Lösungsmittel in Gegenwart eines geeigneten Leitsalzes anodisch oxidiert und dabei polymerisiert. Die Monomer-Konzentration in dem Elektrolyt-Lösungsmitte; beträgt hierbei im allgemeinen etwa 0,1 mol pro Liter Lösungsmittel. Da die Elektrolyse meist nur bis zu kleinen Umsätzen durchgeführt wird, kann diese Konzentration in weiten Grenzen unterschritten, aber auch überschritten werden.

Als Leitsalze dienen bevorzugt ionische oder ionisierbare Verbindungen mit Anionen starker oxidierender Säuren oder auch von gegebenenfalls mit Nitrogruppen substituierten Aromaten mit sauren Gruppen. Als Kationen für diese Leitsalze kommen neben den Erdalkalimetall-Kationen und $H^+$, insbesondere die Alkalimetall-Kationen, vorzugsweise $Li^+$, $Na^+$ oder $K^+$, in Betracht. Sehr günstig sind auch die $NO$ und $NO_2^+$-Kationen sowie insbesondere die Onium-Kationen, vor allem des Stickstoffs und des Phosphors, etwa des Typs $R_4N^+$ und $R_4P^+$, worin die Reste R unabhängig voneinander Wasserstoff, niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeuten. Unter den Ammonium- und Phosphonium-Kationen sind die tertiären und quaternären mit Alkylresten mit 1 bis 4 C-Atomen besonders bevorzugt. Beispielhaft für bevorzugte Onium-Kationen seien neben dem $NH_4^+$-Ion insbesondere das Tetramethylammonium-, das Tetraethylammonium-, das Tetra-n-butylammonium-, das Triphenyl-phosphonium- und das Tri-n-butylphosphonium-Kation genannt.

Als Anionen für das Leitsalz haben sich $BF_4^-$, $AsF_4^-$, $AsF_6^-$, $SbF_6^-$, $SbCl_6^-$, $PF_6^-$, $ClO^4-$, $HSO_4^-$, $SO_4^{2-}$ und $CH_3SO_4$ als besonders günstig erwiesen. Eine weitere Gruppe von Leitsalz-Anionen, die bei der Herstellung der erfindungsgemäßen Copolymeren mit besonderem Vorteil eingesetzt werden, leites sich von Aromaten mit sauren Gruppen ab. Hierzu gehören das $C_6H_5COO$ — Anion sowie insbesondere die Anionen von gegebenenfalls mit Alkylgruppen substituierten aromatischen Sulfonsäuren. In einer anderen sehr günstigen Ausführungsform können die aromatischen Kerne der sauren Aromaten neben den sauren Gruppen auch noch andere Substituenten, insbesondere Nitro-Gruppen, tragen. Zu diesen sauren Nitroaromaten zählen z.B. die Nitrophenole, die Nitrogruppen-substituierten aromatischen Carbonsäuren und die Nitrogruppen-substituierten aromatischen Sulfonsäuren. Insbesondere finden die Salze von Nitro-, Dinitro-, Trinitrophenolen, Nitro-, Dinitro-, Trinitrobenzoesäuren und Nitro-, Dinitro- und Trinitro-benzolsulfonsäuren Einsatz. Auch sind die Salze von Nitroaromaten mit mehreren sauren Gruppen wie phenolischen Hydroxylgruppen, Carboxylgruppen und Sulfonsäuregruppen, geeignet. Ferner sind saure Aromaten mit Nitrosogruppen geeignet. Wegen der damit erzielbaren guten Ergebnisse sind Leitsalze mit dem Benzolsulfonsäure-Anion $C_6H_5SO_3^-$ ganz besonders bevorzugt. Die Leitsalzkonzentration beträgt in dem erfindungsgemäßen Verfahren im allgemeinen 0,001 bis 1, vorzugsweise 0,01 bis 0,1 Mol/l Elektrolytlösungsmittel.

Das erfindungsgemäße Verfahren wird in polaren, vorzugsweise organischen und insbesondere aprotischen Lösungsmitteln, die die Monomeren und das Leitsalz zu lösen vermögen, durchgeführt. Wenn mit Wasser mischbare organische Lösungsmittel Einsatz finden, kann zur Erhöhung der elektrischen Leitfähigkeit eine geringe Menge an Wasser, im allgemeinen bis zu 3 Gew.%, bezogen auf das organische Lösungsmittel, zugesetzt werden, auch wenn in der Regel in einem wasserfreien System gearbeitet wird. Bevorzugte organische Elektrolyt-Lösungsmittel sind z.B. Alkohole, Ether, wie 1,2-Dimethoxyethan, Dioxan und Tetrahydrofuran und Methyltetrahydrofuran, Aceton, Acetonitril, Dimethylformamid, Dimethylsulfoxid, Methylenchlorid, N-Methylpyrrolidon oder Propylencarbonat.

Zur Herstellung der erfindungsgemäßen Copolymere wird bevorzugt in einer einfachen, üblichen elektrolytischen Zelle oder Elektrolyse-Apparatur, bestehend aus einer Zelle ohne Diaphragma, zwei Elektroden und einer externen Stromquelle, gearbeitet. Die Elektroden können dabei beispielsweise aus Graphit sein; im allgemeinen werden jedoch Nickel-, Titan- oder Edelmetallelektroden, bevorzugt Platinelektroden, verwendet. Dabei ist es günstig, wenn zumindest die Anode, insbesondere aber beide Elektroden, flächig ausgebildet sind. In einer besonderen Ausgestaltungsform des erfindungsgemäßen Verfahrens kann die Anode auch aus einem elektrisch leitfähigen Polymeren gebildet werden, wie z.B. aus durch anodische Oxidation hergestelltem Polypyrrol, dotiertem, p-leitendem Polyacetylen oder dotiertem, p-leitendem Polyphenylen. In diesem Fall werden die Pyrrole, Alkine und/oder Aromaten auf die im allgemeinen filmförmigen, elektrisch leitenden Polymer-Anoden aufpolymerisiert.

Je nach Verfahrensführung können unterschiedliche Typen von Copolymeren erhalten werden. Setzt man z.B. Edelmetall-Elektroden und eine Mischung aus Pyrrolen und Alkinen und/oder Aromaten ein, so erhält man ein filmförmiges Polymer, welches die Monomer-Einheiten in statistischer Verteilung eingebaut enthält. Die Monomeren, das sind die Pyrrole und Alkine und/oder Aromaten, können aber auch stufenweise, d.h. nacheinander polymerisiert werden. So kann man beispielsweise zunächst nur die Pyrrole unter Abscheidung eines entsprechenden Polypyrrol-Films auf der Anode polymerisieren und anschließend durch anodische Oxidation der Alkine und/oder Aromaten diese auf das zuvor erzeugte Polypyrrol auf polymerisieren. Dieser Verfahrensvariante kommt es gleich, wenn man einen vorgefertigten Polypyrrol-Film als anode einsetzt und dann auf diese Anode die Alkine und/oder Aromaten aufpolymerisiert. Man erhält so "schichtförmig" aufgebaute Copolymere bzw. Copolymer-Filme mit hoher elektrischer Leitfähigkeit. Diese stufenweise Copolymerisation kann natürlich auch so vorgenommen werden, daß man zuerst die Alkine und/oder Aromaten und dann die Pyrrole polymerisiert oder daß man in mehr als zwei Stufen arbeitet, in dem z.B. zuerst Pyrrole, dann Alkine und/oder Aromaten und schließlich nochmals Pyrrole polymerisiert werden.

Auch bei Einsatz der genannten elektrisch leitfähigen Polymeren als Anodenmaterial können die Pyrrole und Alkine und/oder Aromaten in Mischung miteinander oder stufenweise nacheinander polymerisiert werden. So entsteht beispielsweise bei Einsatz von dotiertem Polyacetylen als Anodenmaterial und einer Mischung aus Pyrrolen und Alkinen ein elektrisch hochleitfähiger Copolymer-Film mit einer Schicht aus Acetylen-Einheiten und einer hiermit über chemische Bindungen verknüpften Schicht aus den Einheiten der Pyrrole und Alkine. Bei stufenweiser Copolymerisation der Pyrrole und Alkine resultiert in diesem Fall ein Copolymer-Film mit einer Schicht aus Acetylen-Einheiten, einer Schicht aus Einheiten der Pyrrole und einer Schicht aus Einheiten der anderen Alkine, wobei die einzelnen Schichten durch chemische Bindungen miteinander verknüpft sind. Entsprechendes gilt für den Einsatz von elektrisch leitfähigem Polyphenylen als Anodenmaterial und Pyrrolen und Aromaten als Monomeren. Eine besonders interessante Verfahrensvariante besteht beispielsweise in dem Einsatz von elektrisch leitfähigem Polypyrrol als Anodenmaterial bei stufenweiser Polymerisation von Alkinen und/oder Aromaten, insbesondere aber Acetylen, und anschließend Pyrrolen als Monomeren. Man erhält so einen elektrisch hochleitfähigen Copolymer-Film, bei dem die beiden außenliegenden Schichten aus Einheiten von Pyrrolen bestehen und die innere, mittlere Schicht, aus Einheiten der Alkine und/oder Aromaten, insbesondere Acetylen, aufgebaut ist. Solche Filme zeigen neben anderen hervorragenden Eigenschaften eine außergewöhnliche Stabilität gegenüber Luft und Feuchtigkeit. Vorteilhaft sind auch solche Copolymer-Filme, bei denen auf einen, als Anode dienenden Polypyrrol-Film eine Mischung von Pyrrolen und Alkinen und/oder Aromaten aufpolymerisiert worden ist.

Werden als Anodenmaterial bereits elektrisch leitfähige Polymere eingesetzt, so ist es zur Herstellung der erfindungsgemäßen Copolymere natürlich hinreichend, wenn in dem erfindungsgemäßen Verfahren nur die jeweils anderen Monomeren zum Einsatz gelangen. Wird als Anodenmaterial z.B. elektrisch leitfähiges Polyacetylen oder elektrisch leitfähiges Polyphenylen verwendet, so können zur Herstellung der erfindungsgemäßen Copolymeren auf dieses Anodenmaterial auch die Pyrrole alleine aufpolymerisiert werden. Besteht andererseits das Anodenmaterial aus einem Polypyrrol-Film, können in dem erfindungsgemäßen Verfahren die Alkine und/oder Aromaten als alleinige Monomere eingesetzt werden.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (Amp.sec) zweckmäßig.

Normalerweise führt man die Elektrolyse bei Raumtemperatur und unter Inertgas durch. Da sich die Reaktionstemperatur bei der Copolymerisation der Pyrrole und Alkine und/oder Aromaten als unkritisch erwiesen hat, kann die Temperatur jedoch in einem breiten Bereich variiert werden, solange die Erstarrungstemperatur bzw. Siedetemperatur des Elektrolyt-Lösungsmittels nicht unter- bzw. überschritten wird. Im allgemeinen hat sich eine Reaktionstemperatur im Bereich von -40 bis +40°C als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z.B. eine Batterie, die eine hinreichend hohe elektrische Spannung liefert. Zweckmäßigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,05 bis 100 mA/cm$^2$, vorzugsweise im Bereich von 0,1 bis 20 mA/cm$^2$.

Die während der Elektrolyse anodisch abgeschiedenen erfin-dungsgemäßen Copolymeren werden zur Entfernung von anhaftendem Leitsalz mit Lösungsmitteln gewaschen und bei Temperaturen von 30 bis 150°C, vorzugsweise unter Vakuum, getrocknet. Bei Einsatz von Graphit-, Edelmetall- oder ähnlichen Elektroden lassen sich danach die im allgemeinen filmförmig abgeschiedenen Copolymeren leicht von der Elektrode ablösen, vor allem wenn Schichtstärken über 50μm abgeschieden wurden. Werden als Anoden-Material leitfähige, filmförmige Polymere eingesetzt, so werden, wie erwähnt, die erfindungsgemäß eingesetzten Comonomeren auf das polymere Elektrodenmaterial aufpolymerisiert, so daß man in diesem Fall ein Copolymer erhält, in dem das als Anode benutzte Polymere mit eingebaut ist.

Die erfindungsgemäßen Copolymere zeigen hohe elektrische Leitfähigkeiten, im allgemeinen im Bereich von 10$^0$ bis 10$^2$ Ohm$^{-1}$ cm$^{-1}$ und besitzen ein hohes mechanisches Niveau. Zur Messung der Reißkraft und Reißfestigkeit werden Filme aus den erfindungsgemäßen Copolymeren mit definierter Abmessung (Einspannlänge 25 mm, Meßlärge 10 mm, Breite 4 mm) gemäß DIN 53 504 auf einer INSTRON 1112-Maschine zum Bruch gestreckt. Die Filme erfahren hierbei nur eine unwesentliche Dehnung. Die elektrische Leitfähigkeit in Ohm$^{-1}$cm$^{-1}$ wird durch Kontaktierung der Filme mit Leitsilber und Messung nach der Zweipunktmethode bestimmt. Weitgehend identische Ergebnisse erhält man durch Messung nach der Vierpunktmethode, wobei die Übergangswiderstände der Kontaktierung keine Rolle spielen können. Die erfindungsgemäß durch anodische Polymerisation hergestellten Copolymere sind zunächst p-leitend. Sie lassen sich jedoch elektrochemisch entladen und dann mit üblichen Elektronendonatoren als Dotierungsmittel, am einfachsten ebenfalls elektrochemisch, in n-leitende Systeme umladen.

Die erfindungsgemäßen Copolymere haben sehr gute anwendungstechnische Eigenschaften und können zur Herstellung von Elektroden, Katalysatoren, elektrischen Speichersystemen, Batterien, Schaltern, Halbleiter-Bauteilen, Abschirmmaterialien, Solarzellen und zur antistatischen Ausrüstung von Kunststoffen Einsatz finden. Vor allem führen sie dort zu einem technischen Fortschritt, wo ein hohes mechanisches Niveau der Bauteile bei geringem spezifischem Gewicht und insgesamt ausgewogenen Eigenschaften von Bedeutung ist.

Die Erfindung wird durch die nachfolgenden Beispiele näher erläutert. Die in den Beispielen angegebenen Teile und Prozente beziehen sich, sofern nicht anders vermerkt, auf das Gewicht.

**Beispiel 1**

In einem Glasgefäß wurden 120 ml Acetonitril, 0,48 g Pyrrol und 0,39 g des Tributylammoniumsalzes der m-Nitrobenzolsulfonsäure vorgelegt. Nach Einbringen von zwei Platin-Elektroden von je 14 cm$^2$ Fläche im Abstand von 4 cm in die Lösung wurde unter Rühren mit einer Strommenge von 140 Amp.sec elektrolysiert. Hierbei schied sich auf der Anode ein schwarzer Polypyrrol-Film ab. Anschließend wurden in den Elektrolyten 0,5 g Terphenyl gegeben und unter den oben angegebenen Bedingungen anodisch auf den Polypyrrol-Film aufpolymerisiert. Nach dem Spülen der beschichteten Anode mit Acetonitril und Trocknen bei 60°C ließ sich der entstandene Copolymer-Film vom Platin lösen. Der 78µm dicke Film hatte eine Reißfestigkeit von 51 N/mm$^2$ und eine elektrische Leitfähigkeit von 80 Ohm$^{-1}$ cm$^{-1}$

Ein analoges Polymeres wurde in kürzerer Zeit erhalten, wenn bei sonst gleicher Arbeitsweise anstelle des Terphenyls ein Komplex aus Terphenyl und m-Nitrobenzolsulfonsäure (Terphenyl-m-nitrobenzolsulfonat) eingesetzt wurde.

**Beispiel 2**

Es wurde in einer Elektrolyseapparatur gemäß Beispiel 1 und unter den dort angegebenen Elektrolysebedingungen gearbeitet, jedoch wurden diesmal 0,5 g Pyrrol und 0,2 g Terphenyl und als Leitsalz 0,6 g des Tributylammoniumperchlorats vorgelegt und die Monomer-Mischung copolymerisiert. Der erhaltene Film mit einer Schichtstärke von 58µm hatte folgende Eigenschaften:

Reißfestigkeit:        60 N/mm$^2$
elektrische Leitfähigkeit: 43 Ohm$^{-1}$cm$^{-1}$

**Beispiel 3**

In einem Elektrolysegefäß gemäß Beispiel 1 wurden 120 ml Acetonitril, 0,48 g Pyrrol und als Leitsalz 1,4 g 2-Nitro-phenol und 1,85 g Tributylamin vorgelegt und gerührt. Unter gleichzeitigem Eindosieren von 0,6 g Acetylen wurde mit einer Strommenge von 140 Amp.sec elektrolysiert. Man erhielt einen Copolymer-Film (Schichtstärke 60µm) mit einer Reißfestigkeit von 41 N/mm$^2$ und einer elektrischen Leitfähigkeit von 21 Ohm$^{-1}$cm$^{-1}$.

**Beispiel 4**

In einer Elektrolyseapparatur gemäß Beispiel 1 wurden 120 ml Acetonitril, 0,48 g Pyrrol, 0,2 g Phenalen, 1,5 g Tributylammonium-sulfat sowie 0,2 g 1,6-Heptadiin und 0,93 g Tributylamin gerührt und mit einer Strommenge von 140 Amp.sec elektrolysiert. Der erhaltene Copolymer-Film hatte eine Schichtstärke von 57µm, eine Reißfestigkeit von 35 N/mm$^2$ und eine elektrische Leitfähigkeit von 33 Ohm$^{-1}$cm$^{-1}$.

**Beispiel 5**

In der Elektrolyseapparatur von Beispiel 1 wurden unter Argon 120 ml Acetonitril, 0,5 g Tetracen, 0,56 g N-Methylpyrrol und 0,39 g des Tributylammoniumsalzes der Perchlorsäure vorgelegt und gerührt. Als Anode diente ein Polypyrrol-Film. Die Elektrolyse wurde mit einer Strommenge von 80 Amp.sec durchgeführt. Es resultierte ein 60µm dicker Film mit einer Reißfestigkeit von 19 N/mm$^2$ und einer elektrischen Leitfähigkeit von 16 Ohm$^{-1}$cm$^{-1}$.

**Beispiel 6**

In einer Elektrolyseapparatur gemäß Beispiel 1 wurden unter Argon diesmal 120 ml Acetonitril, 0,61 g 3,4-Dimethylpyrrol und 0,45 g des Tributylammonium-hexafluorphosphats vorgelegt und gerührt. Als Anode diente ein p-leitender Polyacetylen-Film, der mit 10 % PF$_6$- dotiert war. Bei der Elektrolyse mit einer Strommenge von 140 Amp.sec wurde in einer Schichtdicke von 65µm ein Film mit einer Reißfestigkeit von 20 N/mm² und einer elektrischen Leitfähigkeit von 14 Ohm $^{-1}$cm $^{-1}$ erhalten.

**Beispiel 7**

In der Elektrolyseapparatur von Beispiel 1 wurden 120 ml Acetonitril, 0,84 ml Wasser, 0,48 g Pyrrol und 0,8 g Tetramethylammoniumtetrafluorborat vorgelegt und gerührt. Als Anode diente diesmal ein p-leitender Polyacetylen-Film, der mit 15 % BF$_4$- dotiert war. Die Elektrolyse wurde mit einer Strommenge von 100 Amp.sec durchgeführt. Der erhaltene Copolymer-Film (Schichtstärke 55µm) besaß eine Reißfestigkeit von 30 N/mm² und eine elektrische Leitfähigkeit von 15 Ohm$^{-1}$cm$^{-1}$.

**Beispiel 8**

Es wurde wie in Beispiel 7 gearbeitet, diesmal jedoch als Anode ein p-leitendes Polyphenylen eingesetzt, das mit 23 % AsF$_6$- dotiert war. Nach dem Aufpolymerisieren des Pyrrols auf das Polyphenylen betrug die Leitfähigkeit des Films 150 Ohm$^{-1}$cm$^{-1}$.

**Beispiel 9**

In einer Elektrolyseapparatur gemäß Beispiel 1 wurden 120 ml Acetonitril, 0,84 ml Wasser, 0,48 g Pyrrol, 0,5 g Tetracen, 0,3 g Phenylacetylen und 1,18 g konz. Schwefeisäure vorgelegt und gerührt. Die mit einer Strommenge von 100 Amp.sec durchgeführte Elektrolyselieferte einen 20µm dicken Film mit einer Reißfestigkeit von 15 N/mm² und einer elektrischen Leitfähigkeit von 7 Ohm$^{-1}$cm$^{-1}$.

**Beispiel 10**

In einem Elektrolysegefäß gemäß Beispiel 1 wurden 120 ml Acetonitril, 0,84 ml Wasser, 0,48 g Pyrrol, 0,5 g Acenaphthen, 0,5 g 1,6-Heptadiin und 1,15 g K(AsF$_6$) vorgelegt und gerührt. Die Elektrolyse wurde mit einer Strommenge von 100 Amp.sec durchgeführt. Der erhaltene Copolymer-Film be-saß bei einer Schichtstärke von 32µm eine Reißfestigkeit von 18 N/mm² und eine elektrische Leitfähigkeit von 50 Ohm$^{-1}$cm $^{-1}$.

**Beispiel 11**

In einem Glasgefäß wurden 120 ml Acetonitril, 0,48 g Pyrrol, 0,5 g Azulen und 0,39 g des Tributylammoniumsalzes der m-Nitrobenzolsulfonsäure vorgelegt. Nach Einbringen von zwei Platin-Elektroden von je 14 cm² Fläche im Abstand von 4 cm in die Lösung wurde unter Rühren mit einer Strommenge von 140 Amp.sec elektrolysiert. Hierbei schied sich auf der Anode ein schwarzer, glatter Film ab. Nach dem Spülen der beschichteten Anode mit Acetonitril und Trocknen bei 60°C (5 Std., 10 Torr) ließ sich der entstandene Copolymer-Film vom Platin lösen. Der 40µm dicke Film hatte eine Reißfestigkeit von 50 N/mm² und eine elektrische Leitfähigkeit von 45 Ohm$^{-1}$cm$^{-1}$.

Ein analoges Polymeres wurde erhalten, wenn bei sonst gleicher Arbeitsweise als Leitsalz 0,4 g des Kaliumsalzes der Naphthalindisulfonsäure eingesetzt wurde.

**Beispiel 12**

Es wurde in einer Elektrolyseapparatur gemäß Beispiel 11 und unter den dort angegebenen Elektrolysebedingungen gearbeitet, jedoch wurden diesmal 0,5 g Pyrrol und 0,8 g Inden und als Leitsalz 0,6 g des Triethylammonium- perchlorats vorgelegt und die Monomer- Mischung copolymerisiert. Der erhaltene Film mit einer Schichtstärke von 42µm hatte folgende Eigenschaften:

Reißfestigkeit: 40 N/mm²
elektrische Leitfähigkeit: 41 Chm$^{-1}$cm$^{-1}$

**Beispiel 13**

In einem Elektrolysegefäß gemäß Beispiel 11 wurden 120 ml Acetonitril, 0,48 g Pyrrol und als Leitsalz 1,4 g Trinitrophenol und 1,85 g Tributylamin vorgelegt und gerührt. Unter gleichzeitigem Eindosieren von 0,52 g Inden wurde mit einer Strommenge von 140 Amp.sec elektrolysiert. Man erhielt einen Copolymer-Film (Schichtstärke 44µm) mit einer Reißfestigkeit von 39 N/mm² und einer elektrischen Leitfähigkeit von 62 Ohm$^{-1}$cm$^{-1}$.

**Beispiel 14**

In einer Elektrolyseapparatur gemäß Beispiel 11 wurden 120 ml Acetonitril, 0,48 g Pyrrol, 0,2 g Inden, 0,3 g Cyclopentadien, 1,5 g Benzolsulfonsäure und 0,93 g Tributylamin gerührt und mit einer Strommenge von 140 Amp.sec elektrolysiert. Der erhaltene Copolymer-Film hatte eine Schichtstärke von V5µm, eine Reißfestigkeit von 40 N/mm² und eine elektrische Leitfähigkeit von 64 Ohm$^{-1}$cm$^{-1}$.

**Beispiel 15**

In einer Plektrolyseapparatur gemäß Beispiel 11 wurden unter Argon diesmal 120 ml Acetonitril, 0,61 g 3,4-Dimethylpyrrol, 0,39 g Inden und 0,45 g des Tributylammonium-hexafluorphosphats vorgelegt und gerührt. Als Anode diente ein p-leitender Polyacetylen-Film, der mit 10 % PF$_6$- dotiert war. Bei der Elektrolyse mit einer Strommenge von 150 Amp.sec wurde in einer Schichtdicke von 50μm ein Film mit einer Reißfestigkeit von 35 N/mm$^2$ und einer elektrischen Leitfähigkeit von 35 Ohm$^{-1}$cm$^{-1}$ erhalten.

**Beispiel 16**

In der Elektrolyseapparatur von Beispiel 11 wurden 120 ml Acetonitril, 0,84 ml Wasser, 0,48 g Pyrrol, 0,8 g Azulen, 0,2 g Inden und 1,0 g Tetramethylammoniumtetrafluorborat vorgelegt und gerührt. Als Anode diente diesmal ein p-leitender Polyacetylen-Film, der mit 15 % SO$_4^{2-}$ dotiert war. Die Elektrolyse wurde mit einer Strommenge von 100 Amp.sec durchgeführt. Der erhaltene Copolymer-Film (Schichtstärke 50μm) besaß eine Reißfestigkeit von 60 N/mm$^2$ und eine elektrische Leitfähigkeit von 45 Ohm$^{-1}$cm$^{-1}$.

**Beispiel 17**

Es wurde wie in Beispiel 16 gearbeitet, diesmal jedoch als Anode ein p-leitendes Polyphenylen eingesetzt, das mit 23 % AsF$_6$- dotiert war. Nach dem Aufpolymerisieren des Gemisches aus Pyrrol, Azulen und Inden auf das Polyphenylen betrug die Leitfähigkeit des Films 15 Ohm$^{-1}$cm$^{-1}$.

**Beispiel 18**

In einer Elektrolyseapparatur gemäß Beispiel 11 wurden 120 ml Dioxan, 0,84 ml Wasser, 0,48 g Pyrrol, 0,5 g Inden, 0,3 g Cyclopentadien und 1,18 g konz. Schwefelsäure vorgelegt und gerührt. Die mit einer Strommenge von 100 Amp.sec durchgeführte Elektrolyse lieferte einen 30μm dicken Film mit einer Reißfestigkeit von 30 N/mm$^2$ und einer elektrischen Leitfähigkeit von 10 Ohm$^{-1}$cm$^{-1}$.

**Beispiel 19**

In einem Elektrolysegefäß gemäß Beispiel 11 wurden 120 ml Acetonitril, 0,84 ml Wasser, 0,48 g Pyrrol, 0,5 g Inden, 0,5 g Azulen und 1,15 g K(AsF$_6$) vorgelegt und gerührt. Die Elektrolyse wurde mit einer Strommenge von 100 Amp.sec durchgeführt. Der erhaltene Copolymer-Film besaß bei einer Schichtstärke von 40μm eine Reißfestigkeit von 28 N/mm$^2$ und eine elektrische Leitfähigkeit von 10 Ohm$^{-1}$cm$^{-1}$.

**Patentansprüche**

1. Elektrisch leitfähige Copolymere von Pyrrolen und Alkinen und/oder Aromaten, dadurch gekennzeichnet, daß sie Anionen des bei ihrer Herstellung verwendeten Leitsalzes enthalten.

2. Copolymere nach Anspruch 1, dadurch gekennzeichnet, daß sie die Comonomeren in statistischer Verteilung enthalten.

3. Copolymere nach anspruch 1, dadurch gekennzeichnet, daß sie mindestens eine Schicht aus einem Polymeren von Pyrrolen oder einem Copolymeren von Pyrrolen und Alkinen und/oder Aromaten und mindestens eine damit chemisch verknüpfte Schicht aus einem elektrisch leitfähigen Polymerisat von Alkinen enthalten.

4. Copolymere nach Anspruch 1, dadurch gekennzeichnet, daß sie mindestens eine Schicht aus einem Polymeren von Pyrrolen oder einem Copolymeren von Pyrrolen und Alkinen und/oder Aromaten und mindestens eine chemisch damit verknüpfte Schicht aus einem elektrisch leitfähigen Polyaromaten enthalten.

5. Copolymere nach Anspruch 1, dadurch gekennzeichnet, daß sie mindestens eine Schicht aus einem Polymeren von Alkinen und Aromaten und mindestens eine damit chemisch verknüpfte Schicht aus einem Polymeren von Pyrrolen enthalten.

6. Copolymere nach Anspruch 1, dadurch gekennzeichnet, daß sie mindestens eine Schicht aus einem Copolymeren von Pyrrolen und Alkinen und/oder Aromaten und mindestens eine chemisch damit verbundene Schicht aus Polypyrrol enthalten.

7. Copolymere nach einem der Ansprüche 1 bis 6, dadurch gekennzeichnet, daß es sich bei den Pyrrolen um das unsubstituierte Pyrrol selber und/oder substituierte Pyrrole handelt.

8. Copolymere nach Anspruch 7, dadurch gekennzeichnet, daß sich die Einheiten von Pyrrolen in den Copolymeren im wesentlichen vom unsubstituierten Pyrrol selber ableiten.

9. Copolymere nach einem der Ansprüche 1 bis 6, dadurch gekennzeichnet, daß es sich bei den Alkinen um Acetylen handelt.

10. Copolymere nach einem der Ansprüche 1 bis 6, dadurch gekennzeichnet, daß es sich bei den Aromaten um Oligophenylene oder mehrkernige, kondensierte aromatische Ringsysteme handelt.

11. Copolymere nach einem der Ansprüche 1 bis 6, dadurch gekennzeichnet, daß es sich bei den Aromaten um 5-gliedrige, nicht-benzoide, aromatische Kohlenwasserstoff-Ringsysteme handelt.

12. Copolymere nach Anspruch 11, dadurch gekennzeichnet, daß es sich bei den Aromaten um Azulen oder Inden handelt.

13. Copolymere nach Anspruch 4, dadurch gekennzeichnet, daß es sich bei dem elektrisch leitfähigen Polyaromaten um Polyphenylen handelt.

14. Verfahren zur Herstellung von Copolymeren nach einem der Ansprüche 1 bis 13, dadurch gekennzeichnet, daß man Pyrrole und Alkine und/oder Aromaten nacheinander oder zusammen durch anodische Oxidation in einem polaren Lösungsmittel in Gegenwart eines geeigneten Leitsalzes copolymerisiert.

15. Verfahren nach Anspruch 14, dadurch gekennzeichnet, daß als Anode ein elektrisch leitfähiges Polymeres von Alkinen eingesetzt wird.

16. Verfahren nach Anspruch 14, dadurch gekennzeichnet, daß als Anode ein elektrisch leitfähiger Polyaromat eingesetzt wird.

17. Verfahren nach Anspruch 14, dadurch gekennzeichnet, daß man als Anode ein Polymeres von Pyrrolen einsetzt.

18. Verfahren nach Anspruch 14, dadurch gekennzeichnet, daß man zunächst die Pyrrole alleine polymerisiert und auf den erhaltenen Polymerfilm aus den Pyrrolen anschließend Alkine und/oder Aromaten aufpolymerisiert.

19. Verfahren zur Herstellung von Copolymeren nach Ansprüchen 3 oder 4, dadurch gekennzeichnet, daß man Pyrrole durch anodische Oxidation in einem polaren Lösungsmittel und in Gegenwart eines geeigneten Leitsalzes polymerisiert, wobei als Anode ein elektrisch leitfähiges Polymeres von Alkinen oder ein elektrisch leitfähiger Polyaromat eingesetzt wird.

20. Verfahren nach einem der Ansprüche 14 bis 19, dadurch gekennzeichnet, daß man als Leitsalze ionische oder ionisierbare Verbindungen mit einem Anion aus der Gruppe $BF_4^-$, $AsF_4^-$, $AsF_6^-$, $SbF_6^-$, $SbCl_6^-$, $PF_6^-$, $ClO_4^-$, $HSO_4^-$, $CH_3SO_4^-$ und $SO_4^{2-}$ einsetzt.

21. Verfahren nach einem der Ansprüche 16 bis 20, dadurch gekennzeichnet, daß als Leitsalze Salze von Aromaten mit sauren Gruppen, insbesondere Salze von aromatischen Sulfonsäuren, eingesetzt werden.

## Claims

1. An electrically conductive copolymer of pyrroles and alkynes and/or atomatics which contains anions of the conductive salt used in its manufacture.

2. A copolymer as claimed in claim 1, wherein the comonomers are contained in random distribution.

3. A copolymer as claimed in claim 1, which comprises one or more layers consisting of a polypyrrole or a copolymer of pyrroles and alkynes and/or aromatics, and, chemically bonded to this, one or more layers consisting of an electrically conductive polyalkyne.

4. A copolymer as claimed in claim 1, which comprises one or more layers consisting of a polypyrrole or a copolymer of pyrroles and alkynes and/or aromatics, and, chemically bonded to this, one or more layers consisting of an electrically conductive polyaromatic.

5. A copolymer as claimed in claim 1, which comprises one or more layers consisting of a polymer of alkynes and aromatics and, chemically bonded to this, one or more layers consisting of a polypyrrole.

6. A copolymer as claimed in claim 1, which comprises one or more layers consisting of a copolymer of pyrroles and alkynes and/or aromatics and, chemically bonded to this, one or more layers consisting of a polypyrrole.

7. A copolymer as claimed in any of claims 1 to 6, wherein the pyrroles are unsubstituted pyrrole itself and/or substituted pyrroles.

8. A copolymer as claimed in claim 7, wherein the pyrrole units are essentially based on unsubstituted pyrrole.

9. A copolymer as claimed in any of claims 1 to 6, wherein the alkyne is acetylene.

10. A copolymer as claimed in any of claims 1 to 6, wherein the aromatics are oligophenylenes or polynuclear fused aromatic rine systems.

11. A copolymer as claimed in any of claims 1 to 6, wherein the aromatics are 5-membered non-benzoid aromatic hydrocarbon ring systems.

12. A copolymer as claimed in claim 11, wherein the aromatic is azulene or indene.

13. A copolymer as claimed in claim 4, wherein the electrically conductive polyaromatic is polyphenylene.

14. A process for the preparation of a copolymer as claimed in any of claims 1 to 13, wherein pyrroles and alkynes and/or aromatics are copolymerized, either in succession or together, by anodic oxidation in a polar solvent and in the presence of a suitable conductive salt.

15. A process as claimed in claim 14, wherein the anode used is an electrically conductive polyalkyne.

16. A process as claimed in claim 14, wherein the anode used is an electrically conductive polyaromatic.

17. A process as claimed in claim 14, wherein the anode used is a polypyrrole.

18. A process as claimed in claim 14, wherein the pyrroles are first polymerized alone and alkynes and/or aromatics are then polymerized onto the resulting polypyrrole film.

19. A process for the preparation of a copolymer as claimed in claim 3 or 4, wherein pyrroles are polymerized by anodic oxidation in a polar solvent and in the presence of a suitable conductive salt, an electrically conductive polyalkyne or an electrically conductive polyaromatic being used as the anode.

20. A process as claimed in any of claims 14 to 19, wherein the conductive salt used is an ionic or ionizable compound possessing an anion from the group consisting of $BF_4^-$, $AsF_4^-$, $AsF_6^-$, $SbF_6^-$, $SbCl_6^-$, $PF_6^-$, $ClO_4^-$, $HSO_4^-$, $CH_3SO_4^-$ and $SO_4^{2-}$.

21. A process as claimed in any of claims 16 to 20, wherein the conductive salt used is a salt of an aromatic possessing acidic groups, especially a salt of an aromatic sulfonic acid.

## Revendications

1. Copolymères de pyrroles et d'alcynes et(ou) de composés aromatiques conducteurs de l'électricité, caractérisés en ce qu'ils contiennent des anions du sel conducteur utilisé lors de leur préparation.

2. Copolymères suivant la revendication 1, caractérisée en ce qu'ils contiennent les comonomères en répartition stochastique.

3. Copolymères suivant la revendication 1, caractérisée en ce qu'ils comprennent au moins une couche d'un polymère de pyrroles ou d'un copolymère de pyrroles et d'alcynes et(ou) de composés aromatiques et au moins une couche d'un polymérisat d'alcynes, conducteur de l'électricité, qui y est liée chimiquement.

4. Copolymères suivant la revendication 1, caractérisés en ce qu'ils comprennent au moins une couche d'un polymère de pyrroles ou d'un copolymère de pyrroles et d'alcynes et(ou) de composés aromatiques et au moins une couche d'un composé polyaromatique, conducteur de l'électricité, qui y est liée chimiquement.

5. Copolymères suivant la revendication 1, caractérisés en ce qu'ils comprennent au moins une couche d'un polymère d'alcynes et de composés aromatiques et au moins une couche d'un polymère de pyrroles, qui y est liée chimiquement.

6. Copolymères suivant la revendication 1, caractérise en ce qu'ils comprennent au moins une couche d'un copolymère de pyrroles et d'alcynes et(ou) de composés aromatiques et au moins une couche d'un polypyrrole, qui y est liée chimiquement.

7. Copolymères suivant l'une des revendications 1 à 6, caractérisés en ce que les pyrroles sont choisis parmi le pyrrole non substitué et les pyrroles substitues.

8. Polymères suivant la revendication 7, caractérisés en ce que les unités pyrroliques des copolymères dérivent essentiellement du pyrrole non substitué.

9. Copolymères suivant l'une des revendications 1 à 6, caractérisés en ce que l'alcyne est l'acétylène.

10. Copolymères suivant l'une des revendications 1 à 6, caractérisés en ce que les composés aromatiques sont choisis parmi les oligo-phénylènes et les systèmes aromatiques polycycliques condensés.

11. Copolymères suivant l'une des revendications 1 à 6, caractérisés en ce que les composés aromatiques sont choisis parmi les systèmes hydrocarbonés aromatiques non benzoïdiques à cinq chaînons.

12. Copolymères suivant la revendication 11, caractérisés en ce que les composés aromatiques sont choisis parmi l'azulène et l'indène.

13. Copolymères suivant la revendication 4, caractérisés en ce que le composé polyaromatique conducteur de l'électricité est du polyphénylène.

14. Procédé de préparation de copolymères suivant l'une des revendications 1 à 13, caractérisé en ce que l'on copolymérise des pyrroles et des alcynes et(ou) des composés aromatiques, soit successivement, soit simultanément, par une oxydation anodique dans un solvant polaire en présence d'un sel conducteur approprié.

15. Procédé suivant la revendication 14, caractérisé en ce que l'on emploie comme anode un polymère d'alcynes conducteur de l'électricité.

16. Procédé suivant la revendication 14, caractérisé en ce que l'on emploie comme anode un composé polyaromatique conducteur de l'électricité.

17. Procédé suivant la revendication 14, caractérisé en ce que l'on emploie comme anode un polymère pyrrolique.

18. Procédé suivant la revendication 14, caractérisé en ce que l'on polymérise d'abord les pyrroles seuls, puis on polymérise les alcynes et(ou) les composés aromatiques sur la pellicule polymère pyrrolique formée.

19. Procédé de préparation de copolymères suivant les revendications 3 ou 4, caractérisé en ce que l'on polymérise des pyrroles par une oxydation anodique dans un solvant polaire en présence d'un sel conducteur approprié, l'anode étant un polymère d'alcynes conducteur de l'électricité ou un composé polyaromatique conducteur de l'électricite.

20. Procédé suivant l'une des revendications 14 à 19, caractérisé en ce que les sels conducteurs sont choisis parmi les composés ioniques ou ionisables avec un anion choisi parmi $BF_4^-$, $AsF_4^-$, $AsF_6^-$, $SbF_6^-$, $SbCl_6^-$, $PF_6^-$, $ClO_4^-$, $HSO_4^-$, $CH_3SO_4^-$ et $SO_4^-$.

21. Procédé suivant l'une des revendications 16 à 20, caractérisé en ce que les sels conducteurs sont choisis parmi les sels de composés aromatiques à groupes acides, en particulier parmi les sels d'acides sulfoniques aromatiques.